# DEMANDE DE BREVET EUROPEEN

(11) **EP 1 852 308 A1**
(43) Date de publication de la demande: **07.11.2007**
(21) Numéro de dépôt: 07107369.6
(22) Date de dépôt: 02.05.2007
(51) Int. Cl.: B60R 5/04, B60R 7/02

(54) **Plancher de coffre à plate-forme mobile et véhicule automobile correspondant**

(30) Priorité: 02.05.2006 FR 0603948
(71) Demandeur: WAGON SAS, 79302 Bressuire Cédex (FR)
(72) Inventeur: Feigl, Michael, 85055, Ingolstadt (DE)
(74) Mandataire: Bioret, Ludovic

(57) **Abrégé**

L'invention concerne un plancher de coffre de véhicule automobile, comprenant au moins deux éléments de plancher dont au moins un élément, dit plate-forme (12), est mobile de façon à pouvoir coulisser sensiblement parallèlement à au moins un second élément de plancher (11), de façon à pouvoir prendre au moins deux positions :
- une position de repos dans laquelle l'ensemble desdits éléments de plancher se trouvent sensiblement dans un même plan, dit plan de plancher ; et
- une position de coulissement et de chargement dans laquelle ladite plate-forme est amenée dans un plan de coulissement parallèle audit plan de plancher et au moins en partie superposée à au moins un autre élément de plancher.

## Description

### 1. Domaine de l'invention

Le domaine de l'invention est celui des équipements intérieurs de véhicules automobiles. Plus précisément, l'invention concerne l'aménagement et l'utilisation de coffres de véhicules automobiles. Elle concerne particulièrement, mais non exclusivement, l'aménagement de véhicules tels que les breaks, les monospaces, et plus généralement les véhicules ayant un coffre de grande taille.

### 2. Solutions de l'art antérieur

Les coffres des véhicules automobiles comportent généralement un plancher sur lequel il est possible de poser des objets. Dans les véhicules comportant de grands coffres, il est souvent difficile d'utiliser le coffre de façon optimale.

En effet, la partie du coffre éloignée de l'ouverture de celui-ci est difficilement accessible. Pour y accéder, par exemple pour prendre ou déposer un objet, l'utilisateur est obligé de se pencher de façon parfois importante, ce qui peut poser des problèmes notamment pour des utilisateurs ayant des difficultés à se pencher. Les utilisateurs de petite taille ne peuvent même pas, dans certains cas, accéder à des objets placés au fond du coffre, même en se penchant. Ils sont alors obligés de rentrer dans le coffre, ce qui est particulièrement peu pratique.

De façon générale, lors du chargement d'un coffre, l'utilisateur aura tendance à charger en premier les objets pesant le plus lourd ou étant les plus encombrants. Le chargement de tels objets au fond du coffre étant mal aisé, ces objets restent souvent sur la partie du coffre la plus proche de son ouverture, ce qui complique le chargement optimisé du coffre. La totalité du volume n'est donc pas utilisée de façon rationnelle.

Lorsque les objets ou bagages ont malgré tout été placés au fond du coffre, l'inconvénient existe à nouveau pour les récupérer et les sortir du coffre.

### 3. Objectifs de l'invention

L'invention a notamment pour objectif de pallier ces inconvénients de l'art antérieur.

Plus précisément, un objectif de l'invention est de fournir une solution permettant de mieux utiliser l'espace du coffre d'un véhicule automobile.

Un objectif particulier de l'invention est de fournir une telle solution qui rende plus simple le chargement et le déchargement d'objets dans le coffre.

Dans un mode de réalisation particulier, un autre objectif de l'invention est de fournir une solution simple et efficace d'ouverture d'un espace additionnel dans le coffre.

### 4. Exposé de l'invention

Ces objectifs, ainsi que d'autres qui apparaîtront par la suite, sont atteints à l'aide d'un plancher de coffre de véhicule automobile, comprenant au moins deux éléments de plancher dont au moins un élément, dit plate-forme, est mobile de façon à pouvoir coulisser sensiblement parallèlement à au moins un second élément de plancher, de façon à pouvoir prendre au moins deux positions :
- une position de repos dans laquelle l'ensemble desdits éléments de plancher se trouvent sensiblement dans un même plan, dit plan de plancher ; et
- une position de coulissement et de chargement dans laquelle ladite plate-forme est amenée dans un plan de coulissement parallèle audit plan de plancher et au moins en partie superposée à au moins un autre élément de plancher.

Ainsi, notamment, une plate-forme correspondant à la partie du fond du coffre peut être rapprochée du bord, et aisément chargée, rangée ou déchargée, puis remise en place.

Avantageusement, ladite plate-forme peut également prendre une position de transport, dans laquelle ladite plate-forme se trouve dans ledit plan de coulissement, en regard de ladite position de repos.

Ainsi, notamment lorsqu'elle est chargée, la plate-forme peut être maintenue dans le plan de coulissement. Ceci évite de devoir relever la plate-forme, lorsqu'elle est chargée, avant de la décharger.

De façon préférentielle, le système de l'invention comprend des moyens de verrouillage pour maintenir au moins une desdites plate-formes dans au moins une desdites positions.

Ceci est notamment utile, bien sûr, pour la position de transport.

Ladite plate-forme peut être mobile le long de rails de coulissement, qui sont formés dans le plancher ou dans les parois latérales du coffre.

Selon un mode de réalisation avantageux, ladite plate-forme, dans ladite position de coulissement et de chargement, peut être déplacée au moins partiellement en dehors dudit coffre.

On peut pour ceci prévoir que lesdits rails sont des rails télescopiques.

Le chargement et le déchargement sont alors encore facilités, un accès par les côtés étant possible.

Selon différents modes de réalisation, le déplacement de ladite plate-forme peut être actionné par un moteur, ou être manuel, par exemple par l'intermédiaire de moyens de commande déportés.

Selon un mode de réalisation particulier, le plancher selon l'invention comprend un élément de plancher fixe et une plate-forme, située au fond dudit coffre.

L'invention concerne également un véhicule automobile équipé d'au moins un plancher de coffre tel que décrit ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue partielle d'un coffre selon un mode de réalisation de l'invention, le plancher du coffre étant en position de repos ;
- la figure 2 présente le coffre de la figure 1 dans lequel le plancher est en position relevée dans le plan de coulissement, correspondant également à la position de transport ;
- la figure 3 présente le coffre de la figure 1 dans lequel le plancher est en position de chargement ;
- Les figures 4a, 4b et 4c illustrent de façon schématique un exemple de mécanisme d'actionnement d'un plancher de coffre selon un mode réalisation de l'invention.

### 6. Description détaillée de l'invention

### 6.1 Rappel du principe de l'invention

Le principe général de l'invention repose sur un plancher d'un coffre constitué d'au moins deux éléments, dont au moins un est mobile entre une position dans laquelle les deux éléments sont affleurants (c'est-à-dire dans le même plan) et une position dans laquelle les deux éléments se superposent au moins partiellement.

Ce passage entre deux positions se fait par un décalage de l'élément mobile, dit plate-forme puis par un coulissement de celui-ci. Selon un mode de réalisation préférentiel, la plate-forme reste, pendant son déplacement, sensiblement parallèle à l'élément fixe du plancher.

### 6.2 Principe de la plate-forme coulissante

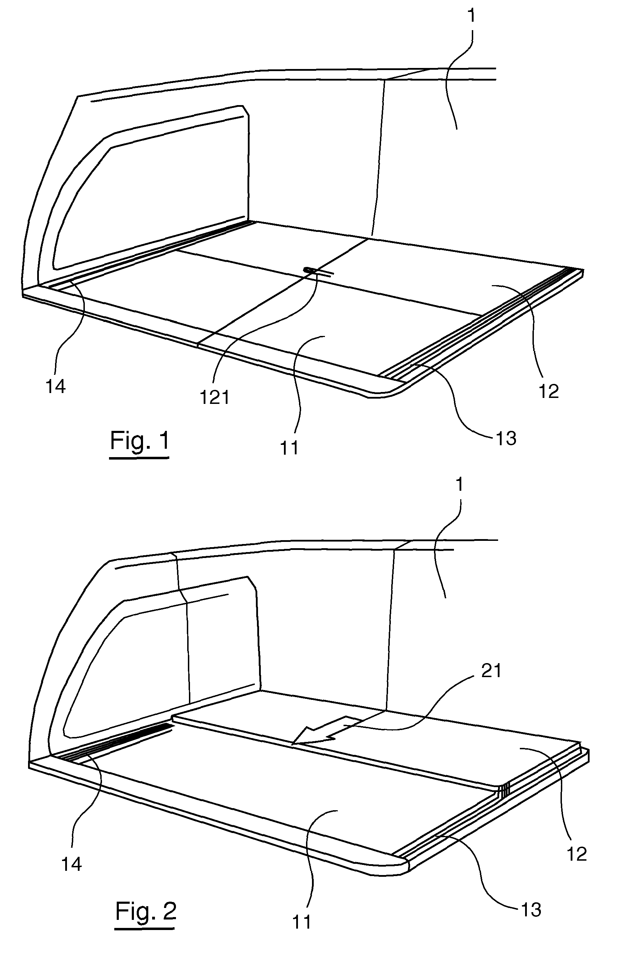

Les figures 1, 2 et 3 présentent une vue partielle d'un coffre d'un véhicule équipé d'un plancher selon un mode de réalisation de l'invention. Pour faciliter la compréhension, seule une paroi latérale du coffre est représentée. Le plancher de ce coffre 1 est constitué de deux éléments distincts.

Dans la position illustrée par la figure 1, appelée position de repos, le premier élément 11 est situé dans la partie du coffre la plus proche de l'ouverture de celui-ci, alors que le second élément 12 est situé dans la partie du coffre éloignée de l'ouverture.

Le premier élément de plancher 11 est un élément fixe, semblable aux éléments de plancher de coffre de l'art antérieur (on peut aussi prévoir qu'il soit basculant, ou également coulissant). Le second élément de plancher 12, également appelé plate-forme, est un élément mobile par rapport à l'élément fixe 11.

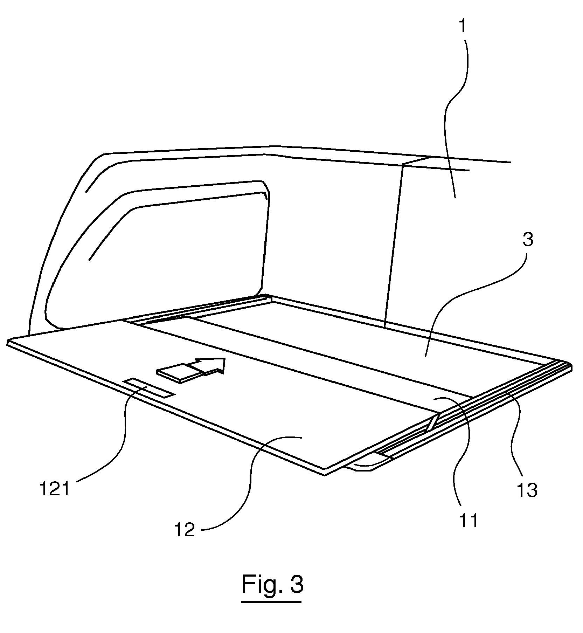

Selon un mode de réalisation particulier de l'invention, cette plate-forme recouvre un espace supplémentaire du coffre 3, visible sur la figure 3. Cet espace supplémentaire du coffre peut être par exemple un emplacement de rangement pour des objets de petite taille, comme une mallette, ou un emplacement de stockage d'une roue de secours ou d'outillage du véhicule.

Dans la position présentée sur la figure 1, l'élément fixe 11 et la plate-forme 12 sont situés dans un même plan de façon à ce que le plancher du coffre soit plat.

L'utilisateur peut agir sur la plate-forme 12 pour la déplacer. Selon les modes de réalisation de l'invention, il peut agir directement sur une poignée 121, ou par l'intermédiaire d'une commande déportée (non représentée), ou encore par l'intermédiaire d'une motorisation (non représentée). La plate-forme effectue dans un premier temps un déplacement sensiblement vertical, vers le haut, de façon à ne plus être dans le même plan que l'élément fixe du plancher 11. Elle se trouve alors dans un plan dit plan de coulissement. Dans cette situation, représentée par la figure 2, la position du plancher est appelée position relevée.

Depuis cette position relevée, la plate-forme 12 peut coulisser horizontalement dans la direction indiquée par la flèche 21. La plate-forme 12 passe alors par-dessus l'élément 11 du plancher. Ce coulissement de la plate-forme 12 peut se faire le long de deux rails 13 et 14 situés sur les côtés du plancher du coffre. Sur les figures 1 à 3 ces rails sont représentés dans le plan du plancher, ils peuvent cependant, dans un autre mode de réalisation, être situés dans le plan des parois latérales du coffre, à proximité du plancher.

La plate-forme 12 peut coulisser jusqu'à une position appelée position de chargement, illustrée par la figure 3. Dans cette position, la plate-forme est proche de l'ouverture du coffre 1 ou dépasse de l'ouverture de ce coffre dans une position de porte-à-faux. Cette position de porte-à-faux peut être obtenue, par exemple, en utilisant des rails 13 et 14 télescopiques.

Dans la position de chargement, l'utilisateur peut, s'il le désire, placer des objets dans l'espace supplémentaire 3 qui est désormais accessible. Il peut également placer des objets sur la plate-forme 12, puis ramener cette plate-forme dans la position relevée ou dans la position de repos du plancher. Les objets placés sur la plate-forme seront alors emmenés au fond du coffre du véhicule sans effort excessif de la part de l'utilisateur.

L'utilisateur n'aura ainsi pas à se pencher pour charger ces objets au fond du coffre. Pour les décharger, il n'aura également qu'à ramener la plate-forme 12 dans sa position de chargement. Il n'aura donc pas non plus à se pencher dans le coffre. Le mouvement de la plate-forme permet donc un chargement et un déchargement particulièrement faciles du coffre du véhicule.

### 6.3 Mécanisme d'actionnement de la plate-forme

Le déplacement de la plate-forme 12, d'abord vertical puis horizontal peut se faire selon de nombreuses techniques, que l'homme du métier saura adapter à partir des mécanismes produisant un mouvement similaire pour l'actionnement de parois vitrées affleurantes d'un véhicule, développés notamment par le titulaire de la présente demande de brevet.

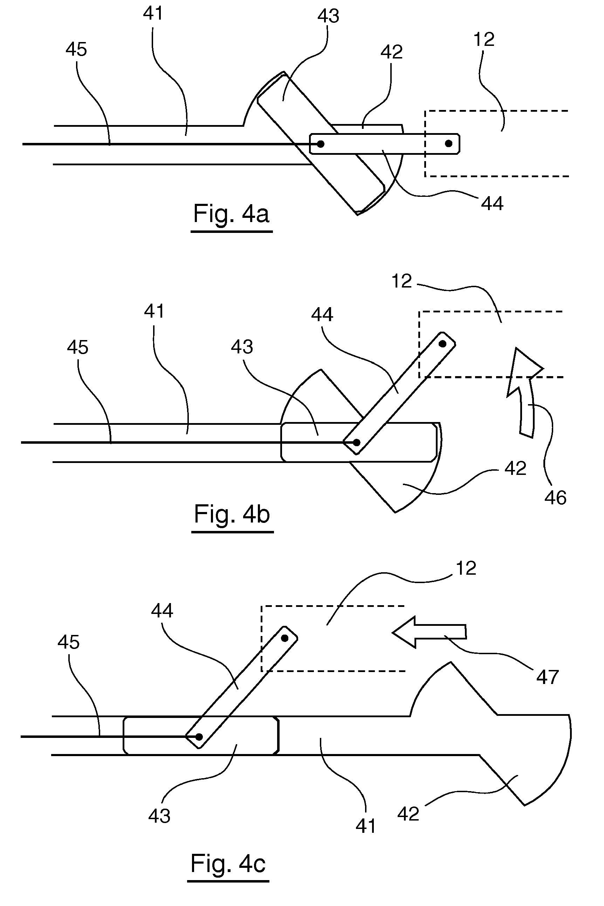

Les figures 4a, 4b et 4c illustrent de façon schématique un exemple de mécanisme pouvant être mis en oeuvre dans un des modes de réalisations possibles de l'invention. Ce mécanisme met en oeuvre un rail 41 qui est situé dans le plan de la paroi latérale du coffre. A l'extrémité du rail 41 se trouve une chambre de basculement 42. Dans la position de repos de la plate-forme 12, représentée sur la figure 4a, un coulisseau 43 se trouve en position basculée dans la chambre de basculement 42. Un levier 44 est solidarisé à ce coulisseau 43 et la plate-forme 12 est fixée pivotante à l'extrémité de ce levier 44.

Quand une action est exercée sur la plate-forme 12, par l'intermédiaire d'une traction sur un câble 45 passant dans le rail 41, cette action entraîne un pivotement du coulisseau 43 dans la chambre de basculement 42. Ce pivotement entraîne une rotation du levier 44, ce qui entraîne un mouvement de la plate-forme 12 selon la direction indiquée par la flèche 46, c'est-à-dire selon une direction sensiblement verticale.

De façon avantageuse, plusieurs mécanismes similaires agissent en même temps sur la plate-forme 12 de façon à ce qu'elle effectue un mouvement de translation tout en restant sensiblement parallèle à un même plan. La plate-forme 12 se trouve alors dans la position relevée du plancher, correspondant à la situation représentée par la figure 4b.

La traction sur le câble 45, quand le plancher est dans la position relevée représentée par la figure 4b, entraîne le coulissement du coulisseau 43 dans le rail 41. Ce coulissement entraîne donc la plate-forme 12 dans la direction indiquée par la flèche 47 vers la position de chargement du plancher, comme le représente la figure 4c.

Des éléments non représentés sur les figures permettent bien évidemment un retour de la plate-forme dans la position de repos selon un principe similaire.

De nombreux autres principes peuvent être mis en oeuvre pour ce mécanisme, comme par exemple des systèmes à genouillère ou des rails définissant un chemin de coulissement non rectiligne au voisinage de la position de repos, pour assurer le changement de plan.

### 6. 3 Autres caractéristiques et avantages

Selon un mode de réalisation particulier de l'invention, un mécanisme de détection de la charge peut être mis en oeuvre pour interdire le passage de la position relevée à la position de repos quand une charge importante est posée sur la plate-forme en vue de son transport dans le fond du coffre. Dans ce cas, la plate-forme peut passer de la position de chargement à la position relevée mais ne peut pas passer dans sa position de repos. La position relevée est donc alors également une position de transport.

Cette caractéristique a pour objectif d'éviter de devoir soulever cette charge en faisant repasser la plate-forme de la position de repos à la position relevée. En effet, si la charge est importante, un tel mouvement demanderait un effort très important à l'utilisateur ou au moteur actionnant le mouvement.

Des mécanismes de verrouillage de la position de la plate-forme peuvent avantageusement être mis en oeuvre, notamment dans la position de repos, dans la position de chargement et/ou dans la position relevée. La description et les figures représentent un mode de réalisation de l'invention mettant en oeuvre deux éléments de plancher, un élément fixe et une plate-forme mobile. Il est bien évident cependant qu'il est possible de mettre en oeuvre l'invention avec plusieurs éléments fixes et/ou plusieurs plate-formes mobiles.

## Revendications

1. Plancher de coffre de véhicule automobile, **caractérisé en ce qu'**il comprend au moins deux éléments de plancher dont au moins un élément, dit plate-forme (12), est mobile de façon à pouvoir coulisser sensiblement parallèlement à au moins un second élément de plancher (11), de façon à pouvoir prendre au moins deux positions :
- une position de repos dans laquelle l'ensemble desdits éléments de plancher se trouvent sensiblement dans un même plan, dit plan de plancher ; et
- une position de coulissement et de chargement dans laquelle ladite plate-forme est amenée dans un plan de coulissement parallèle audit plan de plancher et au moins en partie superposée à au moins un autre élément de plancher.

2. Plancher selon la revendication 1, **caractérisé en ce que** ladite plate-forme (12) peut également prendre une position de transport, dans laquelle ladite plate-forme (12) se trouve dans ledit plan de coulissement, en regard de ladite position de repos.

3. Plancher selon l'une quelconque des revendications 1 et 2, **caractérisé en ce qu'**il comprend des moyens de verrouillage pour maintenir au moins une desdites plate-formes dans au moins une desdites positions.

4. Plancher selon l'une quelconque des revendications 1 à 3, **caractérisé en ce que** ladite plate-forme (12) est mobile le long de rails de coulissement (13, 14).

5. Plancher selon l'une quelconque des revendications 1 à 4, **caractérisé en ce que** ladite plate-forme (12), dans ladite position de coulissement et de chargement, peut être déplacée au moins partiellement en dehors dudit coffre (1).

6. Plancher selon les revendications 4 et 5, **caractérisé en ce que** lesdits rails (13, 14) sont des rails télescopiques.

7. Plancher selon l'une quelconque des revendications 1 à 6, **caractérisé en ce que** le déplacement de ladite plate-forme est actionné par un moteur.

8. Plancher selon l'une quelconque des revendications 1 à 7, **caractérisé en ce qu'**il comprend un élément de plancher fixe (11) et une plate-forme (12), située au fond dudit coffre (1).

9. Véhicule automobile équipé d'un plancher de coffre selon l'une quelconque des revendications 1 à 8, comprenant au moins deux éléments de plancher dont au moins un élément, dit plate-forme (12), est mobile de façon à pouvoir coulisser sensiblement parallèlement à au moins un second élément de plancher, de façon à pouvoir prendre au moins deux positions :
- une position de repos dans laquelle l'ensemble desdits éléments de plancher se trouvent sensiblement dans un même plan, dit plan de plancher ; et
- une position de coulissement et de chargement dans laquelle ladite plate-forme est amenée dans un plan de coulissement parallèle audit plan de plancher et au moins en partie superposée à au moins un autre élément de plancher.
